# EUROPEAN PATENT SPECIFICATION

(11) **EP 2 327 615 B1**
(45) Date of publication and mention of the grant of the patent: **18.02.2015**
(21) Application number: 10251941.0
(22) Date of filing: 17.11.2010
(51) Int. Cl.: B62J 17/00, B62J 25/00

(54) **Scooter-type vehicle**
Motorrollerartiges Fahrzeug
Véhicule du type scooter

(30) Priority: 24.11.2009 JP 2009265987
(43) Date of publication of application: 01.06.2011
(73) Proprietor: Honda Motor Co., Ltd., Tokyo 107-8556 (JP)
(72) Inventor: Tomomatsu, Toshiharu, Wako-shi, Saitama 351-0193 (US); Shigematsu, Genichi, Wako-shi, Saitama 351-0193 (US)
(74) Representative: Stevens, Jason Paul

(56) References cited:
- JP-A- 8 058 657
- JP-A- 2002 019 664
- JP-A- 2002 173 071

## Description

The present invention relates to a scooter-type vehicle, and in particular to the type of vehicle which includes: a body frame with a head pipe steerably supporting a steering handlebar at a front end and a low floor portion located rearwardly of the head pipe; a riding seat including a rider seat portion and a pillion passenger seat portion, positioned such that the low floor portion is located between the head pipe and the riding seat; a body cover including a floor cover which covers the low floor portion from above and from both sides and a seat side cover which covers from the side a rear portion of the body frame below the riding seat; and pillion passenger steps, each supported by the body frame so as to be operable between an extended position where the pillion passenger step projects from the body cover so as to make it possible to receive the foot of the pillion passenger thereon and a stored position where the pillion passenger step is folded toward the body cover.

Japanese Patent No. 3938652 discloses a scooter-type vehicle which is provided with generally rod-like pillion passenger steps used to receive the feet of a pillion passenger, in which the pillion passenger steps are folded during non-use and are each stored in their folded position along a rear portion of a cover shaped like a boomerang (hereinafter a "boomerang cover").

In the scooter-type vehicle of Japanese Patent No. 3938652, the boomerang cover is made more evident by changing the colour and material thereof, thereby improving a degree of freedom of design. On the other hand, during extension and retraction of the pillion passenger step, the step itself can frequently come into contact with the cover, as can the pillion passenger's foot. Thus, the boomerang covers tend to be scratched more than the other covers. As described in Japanese Patent No. 3938652, a portion adapted to receive the pillion passenger step stored therein and its periphery may be made of a separate boomerang cover as a single piece. In such a case, if a scratched boomerang cover is replaced, it is necessary to replace the overall boomerang cover. Therefore, the cost for a replacement part tends to rise.

Other designs of scooter-type vehicles, with folding pillion passenger steps, are disclosed in JP 2002-173071 (on which the preamble of claim 1 is based) and JP 8-58657.

The present invention has been made in view of such situations and aims to provide a scooter-type vehicle where a part of a body cover on the periphery of a pillion passenger step can easily be replaced at low cost.

According to a first aspect of the present invention, there is provided a scooter-type vehicle as set out in independent claim 1.

The floor cover which covers the low floor portion of the body frame from above and both sides is provided with the recessed storage portion for storing the pillion passenger step in its stored position, and the seat lower cover disposed between the floor cover and the seat side cover which covers from the side the rear portion of the body frame below the riding seat as viewed from the side is formed separately from the floor cover and the seat side cover. Therefore, if the seat lower cover is scratched during the use of the pillion passenger step, only the relatively small-sized seat lower cover needs to be replaced, whereby a replacement part can easily be replaced at low cost. In addition, the seat lower cover is tilted rearwardly upwardly along the upper edge of the storing recessed portion; therefore, when the pillion passenger sitting on the pillion passenger seat portion extends her or his legs from the rear upside toward the front downside and rests the feet on the pillion passenger steps, the seat lower cover is shaped to match with the movement of the leg, whereby a portion likely to be scratched can effectively be made as a separate member. Thus, the seat floor cover can be more downsized.

Furthermore, with this arrangement, the step floor cover separate from the side floor cover is formed with the step-opposing wall portion facing the pillion passenger step located at the storing position so as to form the inner-end closing portion of the storing recessed portion. Therefore, the number of component parts can be reduced. More specifically, a portion of the step floor on which the rider's foot rests is likely to be scratched with gravel and the like adhering to the foot of the rider; therefore, it cannot be painted. In addition, the inner-end closing portion of the storing recessed portion is likely to be scratched by contact with the side surface of the pillion passenger's foot resting on the pillion passenger step located at the expanded position; therefore, it cannot be painted. Thus, the portions incapable of being painted are continuously formed as the step floor cover which is the same part, so that the number of component parts can be reduced.

Preferably, the pillion passenger step is provided with a flat foot-resting surface to receive a pillion passenger's foot resting thereon, and is supported by the body frame in such a manner that the foot-resting surface is tilted forwardly upwardly when the pillion passenger step is in its extended position.

As the pillion passenger step is provided with the flat foot-resting surface used to receive a pillion passenger's foot resting thereon, a contact area of the foot with the pillion passenger step can largely be ensured, which makes it possible to improve a sense of safety. The foot of the pillion passenger sitting on the pillion passenger seat portion is raised forwardly. The foot-resting surface is tilted forwardly upwardly when the pillion passenger step is in its extended position, and so the pillion passenger can rest the feet on the pillion passenger steps without a sense of discomfort.

In a further preferred form, the seat lower cover, the floor cover and the seat side cover are coloured differently in tone from each other.

With this arrangement, a stress or emphasis in view of design can be placed. In addition, a colour occupation area of the seat side cover is reduced on the side surface of the vehicle, which can make the vehicle look compact.

In a further preferred form, a lower portion of the seat side cover and an upper portion of the seat lower cover are formed inwardly concavely so as to cooperatively form a curved recessed portion. Therefore, running-air flowing along the side surface of the vehicle body can be arranged.

It is further preferred for the curved recessed portion is formed to be tilted rearwardly upwardly. With this arrangement, the running-air flowing along the side surface of the vehicle body can be arranged more effectively.

Preferably, a grab rail carrier is disposed above a rear wheel so as to partially overlap a rear portion of the pillion passenger seat portion as viewed from the side, a taillight is disposed between the rear wheel and the grab rail carrier in the vertical direction, and a rear side cover separate from the seat side cover is disposed below the grab rail carrier as viewed from the side and between the seat side cover and the taillight in a front-to-back direction.

When the grab rail carrier is gripped by the pillion passenger or a burden is tied to the grab rail carrier, the rear side cover which is a cover below the grab rail carrier may be scratched due to the contact with a rope or the like. However, with this preferred arrangement, if scratching occurs, only the relatively small-sized rear side cover needs to be replaced; therefore, a replacement part can be made inexpensive.

In a preferred form, the seat side cover and the rear side cover are coloured differently in tone from each other.

Since the seat side cover and the rear side cover are different in tone from each other, a stress or emphasis in view of design can be placed. In addition, the colour occupation area of the seat side cover is reduced on the side surface of the vehicle, which can make the vehicle look compact.

A preferred embodiment of the invention will now be described by way of example only and with reference to the accompanying drawings, in which:
Fig. 1 is a side view of an embodiment of a scooter-type vehicle according to the present invention with a body cover removed;
Fig. 2 is a side view of the scooter-type vehicle with the body cover in place;
Fig. 3 is a view in the direction of arrow 3 in Fig. 2;
Fig. 4 is a view in the direction of arrows 4-4 in Fig. 2;
Fig. 5 is a longitudinal side view, partially in cross-section, of a front cover;
Fig. 6 is a cross-sectional view taken along line 6-6 in Fig. 4;
Fig. 7 is a cross-sectional view taken along line 7-7 in Fig. 2;
Fig. 8 is a cross-sectional view taken along line 8-8 in Fig. 2; and
Fig. 9 is a cross-sectional view taken along line 9-9 in Fig. 2.

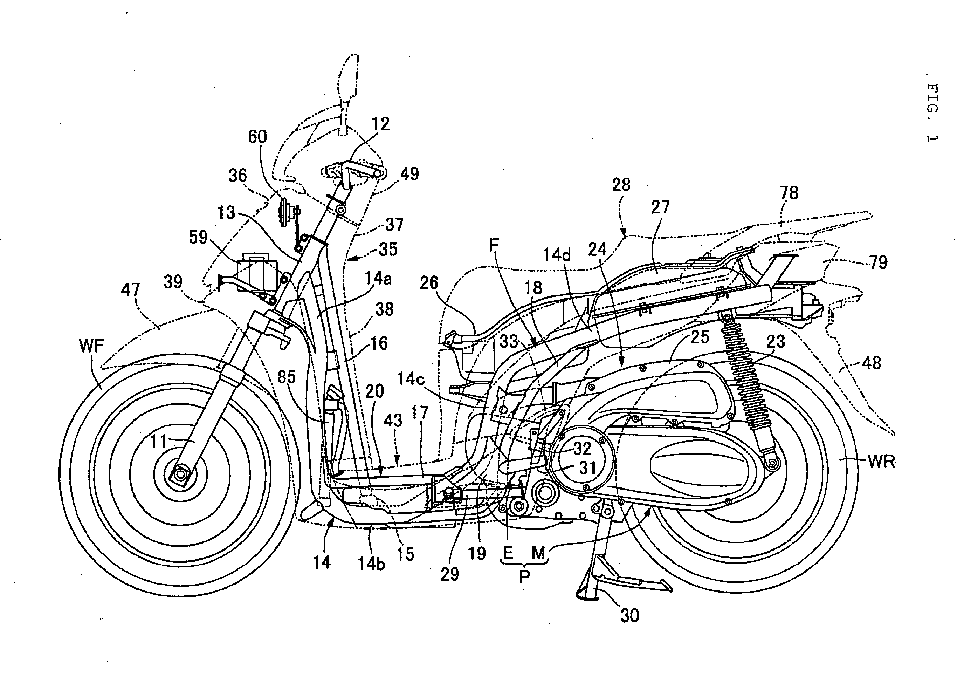

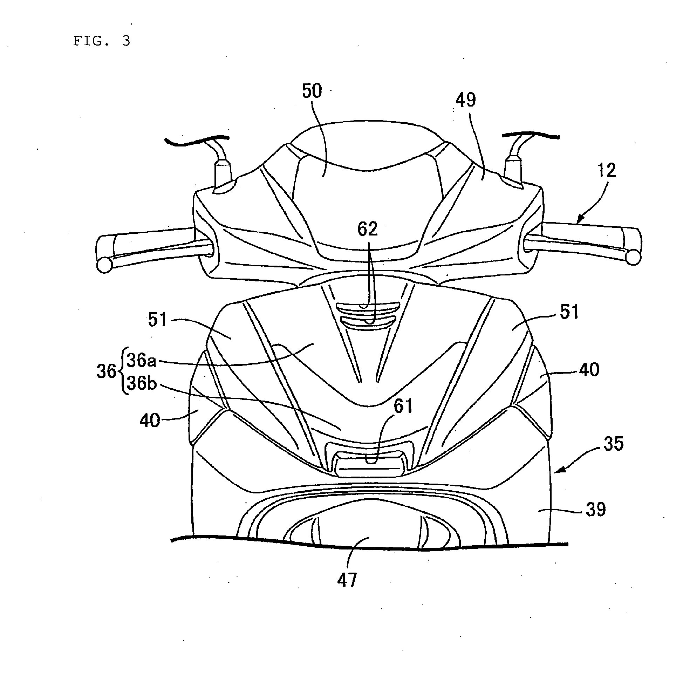

A preferred embodiment of the scooter of the present invention will be described with reference to Figs. 1 to 9.

In Fig. 1, a body frame F of a scooter-type vehicle includes: a head pipe 13 for steerably supporting a front fork 11 connected to a front wheel WF and a steering handlebar 12 continuous with the upper portion of the front fork 11; and a pair of left and right main frames 14 joined to the head pipe 13 at their front end.

Each of the main frames 14 integrally includes a down frame portion 14a, a lower frame portion 14b, a rising frame portion 14c and a seat rail portion 14d and is preferably formed by bending a single pipe. The down frame portion 14a extends downwardly from the head pipe 13. The lower frame portion 14b extends rearwardly from the lower end of the down frame portion 14a and has a rear half portion which is slanted rearwardly upwardly. The rising frame portion 14c rises upward from the rear end of the lower frame portion 14b. The seat rail portion 14d extends rearwardly while being slanted rearwardly upwardly from the upper end of the rising frame portion 14c.

The body frame F further includes a cross member 15, a front sub-frame 16, a pair of left and right step frames 17, a pair of left and right rear sub-frames 18 and a pair of left and right pivot plates 19, in addition to the head pipe 13 and both the main frames 14.

The cross member 15 is provided between respective front portions of the lower frame portions 14b of the main frames 14. The front sub-frame 16 is provided between the head pipe 13 and a widthwise central portion of the cross member 15, and is disposed rearwardly of the down frame portions 14a of the main frames 14. Both the step frames 17 are disposed above the corresponding lower frame portions 14b. In addition, the step frames 17 are joined at front ends to the corresponding lower portions of the down frame portions 14a of the main frames 14, extend rearwardly, and joined at their rear ends to the corresponding rear portions of the lower frame portions 14b In this way, the lower frame portions 14b of the main frames 14 and the step frames 17 constitute a low floor portion 20 located rearwardly of the head pipe 13.

The rear sub-frames 18 are each provided between a rear portion of the lower frame portion 14b of the main frame 14 and a front portion of the seat rail portion 14d, so as to be located below the lower frame portion 14b of the main frame 14 and rearwardly of the rising frame portion 14c. The pivot plates 19 are each provided between the rear portion of the lower frame portion 14b of the main frame 14 and the lower portion of the rising frame portion 14c, and the lower portion of the rear sub-frame 18.

A power unit P composed of an engine E and a transmission device M is supported by the pivot plates 19 so that it can swing up and down. The engine E is disposed forwardly of a rear wheel WR. The transmission device M is configured to transmit output power of the engine E toward the rear wheel WR while changing the output power and is disposed on the left side of the rear wheel WR. The rear wheel WR is rotatably supported by the rear portion of the power unit P. A rear cushion unit 23 is disposed between a rear portion of the left seat rail portion 14d of the body frame F and the rear portion of the power unit P.

An air cleaner 25 disposed at an upstream end of an intake system 24 provided for the engine E is disposed on and supported by the power unit P. A storage box 26 is disposed above the engine E so as to be supported between the front portions of the seat rail portions 14d. A fuel tank 27 is disposed rearwardly of the storage box 26 so as to be supported between the rear portions of the seat rail portions 14d. A riding seat 28 is formed as a tandem-type by integrally including a rider seat portion 28a and a pillion passenger seat portion 28b disposed rearwardly of the rider seat portion 28a. The low floor portion 20 of the body frame F is located between the head pipe 13 and the riding seat 28. The riding seat 28 is disposed to cover the storage box 26 and the fuel tank 27 from above. The front end portion of the riding seat 28 is rotatably connected to the front end upper portion of the storage box 26.

A battery (not shown) is housed in the low floor portion 20 of the body frame F. A side stand 29 is rotatably attached to a front portion of the left pivot plate 19, and a main stand 30 is rotatably attached to a lower portion of the power unit P.

Support pipes 31 are secured to intermediate portions of both the rear sub-frames 18 so as to extend rearwardly upwardly. Pillion passenger steps 33, on which a pillion passenger sitting on the pillion passenger seat portion 28b can rest their feet, are supported by respective step support portions 32 which are provided at the corresponding rear portion of the support pipes 31.

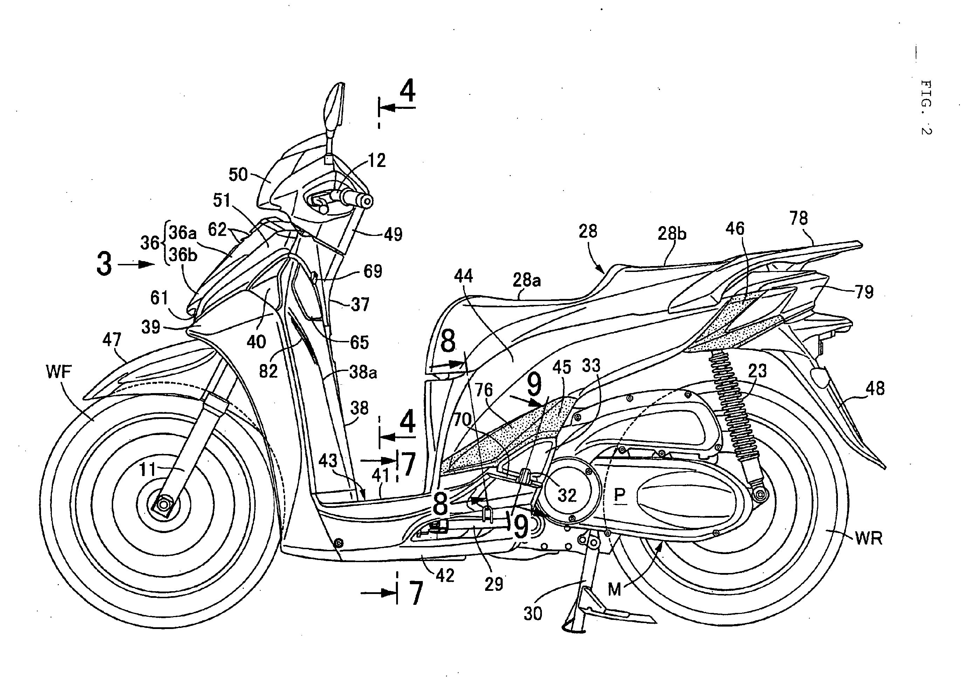

With additional reference to Figs. 2 to 4, the body frame F, part of the power unit P, the storage box 26 and the fuel tank 27 are covered by a body cover 35. The body cover 35 includes an upper front cover 36 covering the head pipe 13 from the front; a centre cowl 37 covering from the rear side the upper portion of the down frame portion 14a of the main frame 14 and the head pipe 13 and merging with the rear portion of the upper front cover 36; a leg shield 38 provided continuously with the centre cowl 37 so as to cover from the front both the feet of the rider sitting on the rider seat portion 28a of the riding seat 28; and a lower front cover 39 disposed rearwardly of the front wheel WF so as to connect between blinkers 51 installed on both sides of the leg shield 38 and on both sides of the upper front cover 36. The body cover 35 further includes a floor cover 43 continuous with the lower portion of the leg shield 38 and of the lower front cover 39 so as to cover the low floor portion 20 of the body frame F from above and both sides; seat side covers 44 each covering from the side a rear portion of the body frame F, i.e., the rising frame portion 14c and seat rail portion 14d of the main frame 14 and the rear sub-frame 18 below the riding seat 28; seat lower covers 45 each disposed between the floor cover 43 and the seat side cover 44 as viewed from the side; and rear side covers 46 continuous with the rear portion of the seat side cover 44.

The centre cowl 37 is formed in a shape whose widthwise central portion projects downward. The leg shield 38 is formed with vertically extending ridge lines 38a, 38a on both sides. In addition, the leg shield 38 is formed at a widthwise central portion with a recessed portion 81 conforming to the projecting portion of the centre cowl 37.

The front wheel WF is covered from above by a front fender 47 supported by the front fork 11. The rear wheel WR is covered from the rear and from above by a rear fender 48 disposed to project downwardly from the rear portions of the rear side covers 46.

A central portion of the steering handlebar 12 is covered by a handlebar cover 49. A headlight 50 is disposed at the front portion of the handlebar cover 49. The blinkers 51 are disposed on the left and right sides of the upper front cover 36.

Incidentally, both the left and right side upper portions of the lower front cover 39, the blinkers 51 on both sides of the upper front cover 36, and both the left and right upper portions of the leg shield 38 are connected together at the front portion of the body cover 35 with corresponding front side covers 40 located at respective most outward positions. The front side covers 40, which constitute part of the body cover 35, are formed separately from the lower front cover 39, the upper front cover 36 and the leg shield 38. In this way, if a portion of the front portion of the body cover 35 located at the most outward position is damaged, it is possible to deal with such an event by replacing only the front side cover 40.

A meter unit 53 including a speed meter and a fuel meter is disposed on the upper portion of the handlebar cover 49. A dimmer switch 54, a horn switch 55 and a blinker switch 56 are disposed at the left end portion of the handlebar cover 49. A kill switch 57 and a starter switch 58 are disposed at the right end of the handlebar cover 49.

An antilock brake controller 59 and a horn 60 are disposed in front of the head pipe 13, the horn 60 being located above the antilock brake controller 59. The antilock brake controller 59 and the horn 60 are housed between the upper front cover 36 and the centre cowl 37.

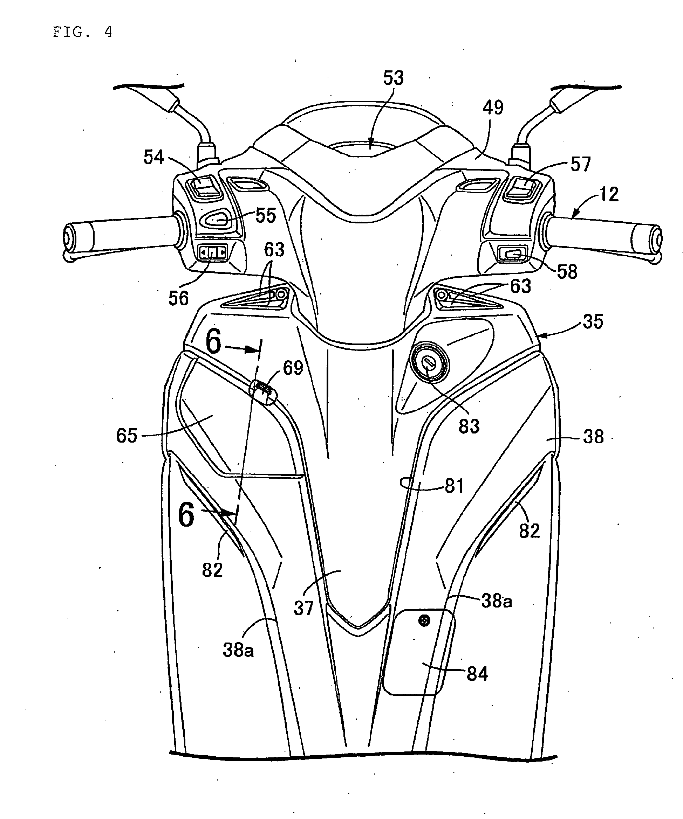

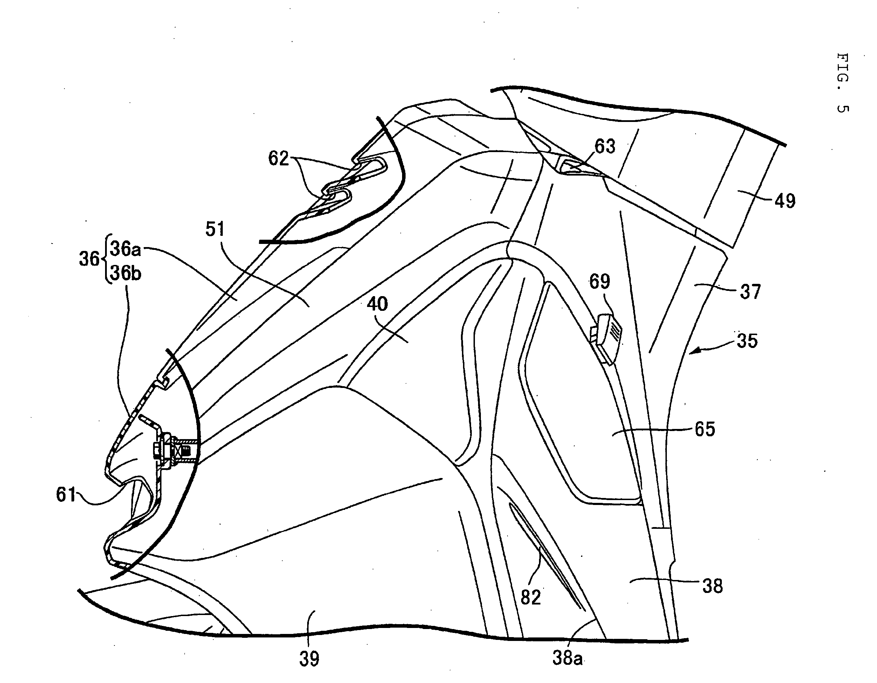

With additional reference to Fig. 5, the upper front cover 36 is composed of an upper front cover upper part 36a shaped to project downwardly in a lower edge centre and an upper front cover lower part 36b shaped to sag downwardly in an upper edge centre. A lower suction hole 61 is formed between the front end lower portion of the upper front cover lower part 36b and the upper end upper portion of the lower front cover 39 to introduce running air into between the upper front cover 36 and the centre cowl 37. A plurality of upper suction holes 62 are formed at the front portion of the upper front cover upper part 36a of the upper front cover 36 and in front of the horn 60 so as to introduce running air into between the upper front cover 36 and the centre cowl 37. On the other hand, as clearly illustrated in Fig. 4, a plurality of first lead-out holes 63 are formed at both side upper ends of the centre cowl 37 so as to lead out the air introduced into between the upper front cover 36 and the centre cowl 37. The leg shield 38 is formed with elongate second lead-out holes 82, 82 slanted inwardly along the corresponding ridge lines 38a, 38a of the leg shield 38. In this way, it is possible to arrange air flow in the space surrounded by the upper front cover 36 and centre cowl 37.

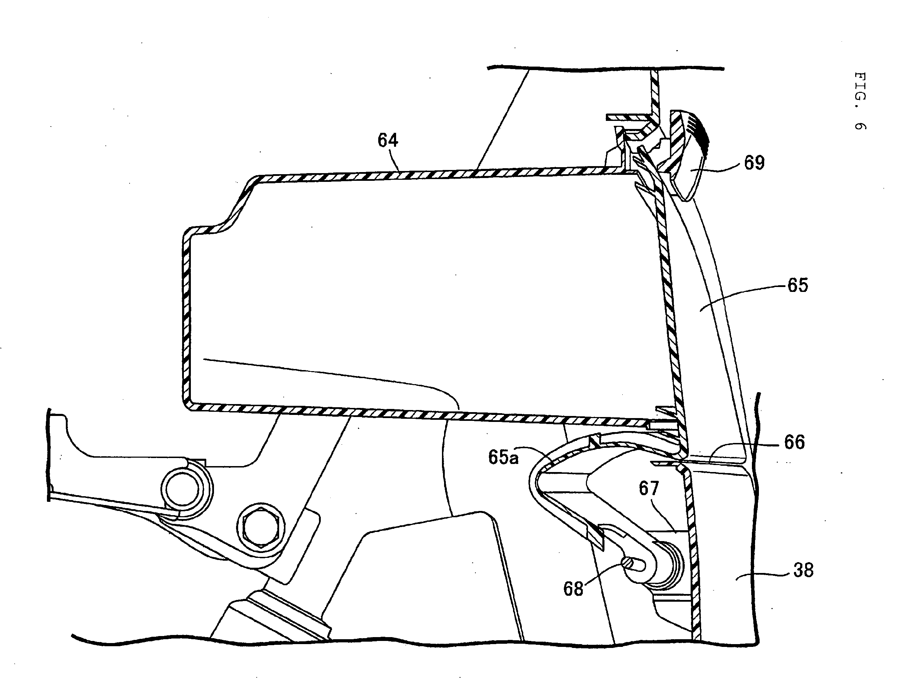

With further additional reference to Fig. 6, the leg shield 38 is integrally provided at a left upper portion with a cylindrical change box 64 whose front end is closed. A lid 65 closing the rear end opening portion of the change box 64 is rotatably attached to the leg shield 38.

The leg shield 38 is provided with an insertion hole 66 below the change box 64. An arm portion 65a provided integrally, i.e., continuously with the lower portion of the lid 65 is inserted into the leg shield 38 from the insertion hole 66. On the other hand, a pair of brackets 67 is provided integrally with the front surface of the leg shield 38. The arm portion 65a is supported by the brackets 67 and can rotate around a pin 68. In this way, the lid 65 can be moved between a position where the rear end opening portion of the change box 64 is closed (as illustrated in Fig. 6) and a position where the arm portion 65a is turned to a position coming into contact with the leg shield 38 at the lower lateral edge of the opening portion to open the rear end opening portion of the change box 64.

Additionally, the leg shield 38 is integrally formed with an engaging piece 69 above the rear end opening portion of the change box 64. The engaging piece 69 is engaged with an upper end portion of the lid 65 when the lid is in the closed position, to hold the lid 65 in the closed position. In addition, the engaging piece 69 can be turned to a position releasing the engagement with the lid 65.

A key cylinder 83 is disposed at a right upper end portion of the leg shield 38. A maintenance cover 84 is attached to a right lower portion of the leg shield 38 in an openable and closable manner. The maintenance cover 84 is used to access a feed water inlet to a radiator 85 (see Fig.1) disposed between the down frame portions 14a of the pair of left and right main frames 14.

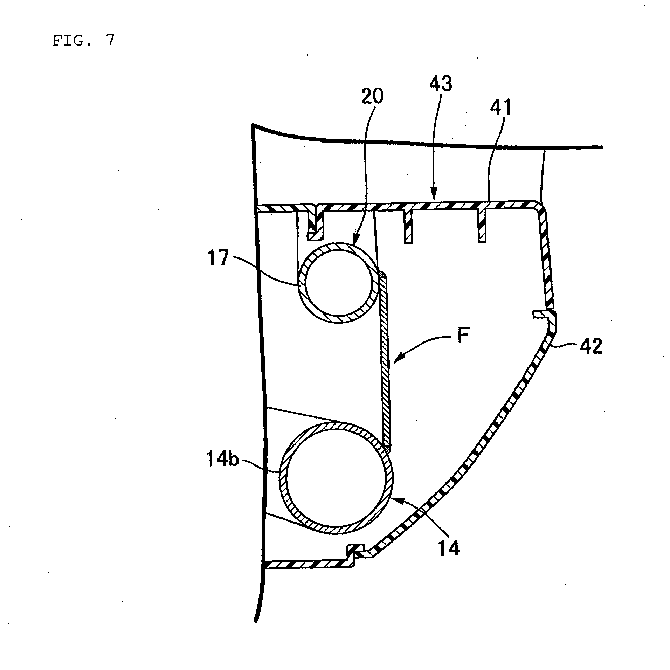

With additional reference to Fig. 7, the floor cover 43 is composed of a step floor cover 41 and a pair of side floor covers 42. The step floor cover 41 allows the feet of the rider sitting on the rider seat portion 28a of the riding seat 28 to rest thereon and covers the low floor portion 20 of the body frame F from above. The pair of side floor covers 42 are formed separately from the step floor cover 41, are provided continuously with both left and right sides of the step floor cover 41, and cover the low floor portion 20 from the side.

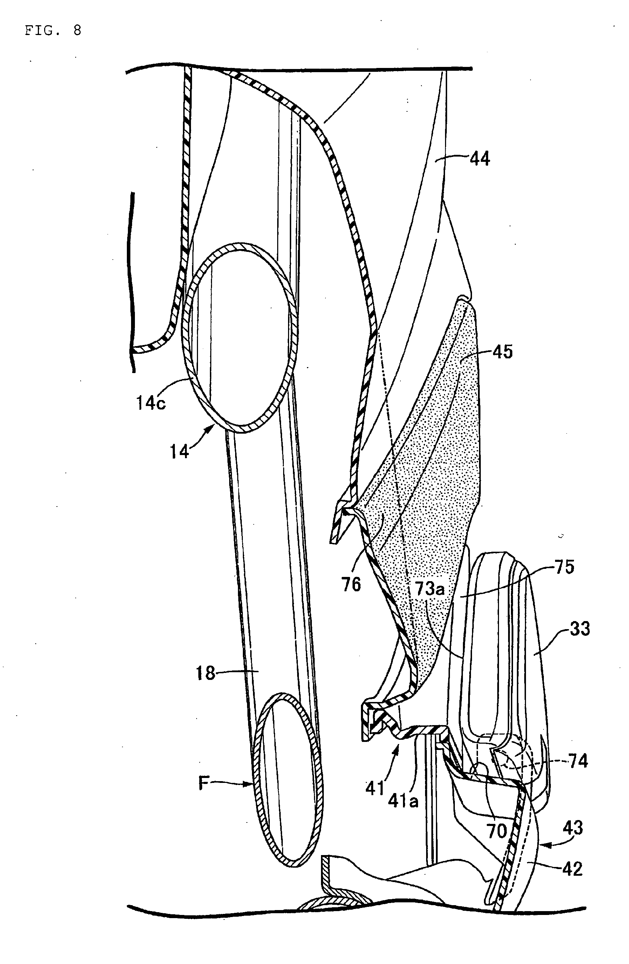

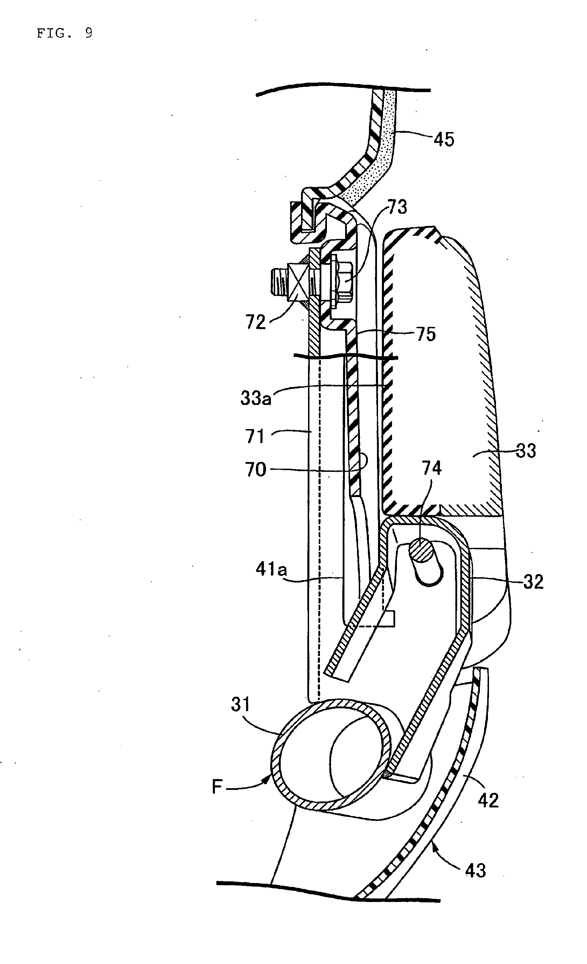

Referring to Figs. 8 and 9, the pillion passenger steps 33, which the pillion passenger sitting on the pillion passenger seat portion 18b can rest their feet on, are each rotatably supported by the step support portion 32 via a support shaft 74 with an axis tilted forwardly upwardly. The pillion passenger steps 33 are supported by the body frame F so as to be movable between an extended position where they project from each of both the left and right rear portion of the floor cover 43 included in the body cover 35, and a stored position (the position illustrated in Figs. 8 and 9) where they are folded toward the floor cover 43.

Additionally, the floor cover 43 is provided with recessed storage portions 70 for storing the respective pillion passenger steps 33 when they are in the stored position. Each recessed storage portion 70 is composed of a rear portion of the side floor cover 42 and a rearwardly extending portion 41 a provided continuously with each of both left and right rear portions of the step floor cover 41 so as to be located above the rear portion of the side floor cover 42. The rearwardly extending portion 41 a is supported by a support plate 71 secured to the support pipe 31 provided on the body frame F by means of a weld nut 72 and a bolt 73.

Further, the pillion passenger steps 33 are each provided with a flat foot-resting surface 33a for receiving the foot of the pillion passenger resting thereon. Since the support shaft 74 has an axis tilted forwardly upwardly, the foot-resting surface 33a will also be tilted forwardly upwardly in the extended position of the pillion passenger step 33.

Incidentally, a part of the rearwardly extending portion 41 a of the step floor cover 41 forms an inner-end closing portion of the recessed storage portion 70. A step-opposing wall portion 75 forming the inner-end closing portion is formed in the rearwardly extending portion 41 a so as to be opposed to the foot-resting surface 33a of the pillion passenger step 33 when the step 33 is in the stored position.

Referring again to Fig. 2, the seat lower covers 45 are each formed separately from the step floor cover 41 and side floor cover 42 of the floor cover 43 and from the seat side cover 44. In addition, the seat lower cover 45 is disposed between the floor cover 43 and the seat side cover 44 as viewed from the side so as to be tilted rearwardly upwardly along the upper edge of the recessed storage portion 70.

The seat lower cover 45 is formed to extend to the front of the pillion passenger step 33 as stored in the recessed storage portion 70. Thus, the seat lower cover 45 can cover a portion likely to contact a tiptoe or the like.

Additionally, the seat lower cover 45, the floor cover 43 and the seat side cover 44 are coloured differently in tone from each other. Figs. 2 and 8 illustrate the different tone by stippling the surface of the seat lower cover 45.

A lower portion of each of the seat side covers 44 and an upper portion of each of the seat lower covers 45 are formed inwardly concavely so as to cooperatively form a curved recessed portion 76. To illustrate the formation of the curved recessed portion 76, Fig. 8 depicts, with a chain line, a straight line connecting an external surface of a vertical intermediate portion of the seat side cover 44 with an external surface of a lower portion of the seat lower cover 45. The curved recessed portion 76 is formed inwardly concavely from the chain line. In addition, the curved recessed portion 76 is formed to be tilted rearward upwardly.

Focusing on Fig. 2, a grab rail carrier 78 partially overlapping the rear portion of the pillion passenger seat portion 28b of the riding seat 28 as viewed from the side is disposed above the rear wheel WR. A taillight 79 is disposed between the rear wheel WR and the grab rail carrier 78 in the vertical direction.

The rear side covers 46 constituting part of the body cover 35 are each formed separately from a corresponding one of the seat side covers 44. The rear side covers 46 are each disposed below the grab rail carrier 78 as viewed from the side and between the seat side cover 44 and the taillight 79 in the front-to-back direction. The rear side covers 46 are each formed in a substantially V-shape, which opens rearwardly, and the taillight 79 is partially disposed in a valley portion of the V-shape.

Additionally, the seat side cover 44 and the rear side cover 46 are coloured differently in tone from each other. Fig. 2 illustrates the different tone by stippling the surface of the rear side cover 46.

A description will now be given of the operation of the embodiment. The pillion passenger steps 33 are each supported by the body frame F to be operable between the extended position where it projects from the body cover 35 so as to be able to receive the feet, resting thereon, of the pillion passenger sitting on the pillion passenger seat portion 28b, and the stored position where it is folded toward the body cover 35. The floor cover 43 constituting part of the body cover 35 so as to cover the low floor portion 20 included in the body frame F from above and both sides is provided with the recessed storage portions 70, each storing a pillion passenger step 33 in its stored position. The seat lower covers 45 each formed separately from the seat side cover 44 and the floor cover 43 covering, from the side, the rear portion of the body frame F below the riding seat 28 while constituting part of the body cover 35 are each disposed between the floor cover 43 and the seat side cover 44 as viewed from the side. Therefore, if the seat lower covers 45 are scratched during the use of the pillion passenger steps 33, only the relatively small-sized (and correspondingly relatively cheap) seat lower cover 45 needs to be replaced. Thus, a replacement part can be replaced with ease at low cost.

The seat lower covers 45 are each tilted rearwardly upwardly along the upper edge of the recessed storage portion 70. Therefore, when the pillion passenger sitting on the pillion passenger seat portion 28b extends her or his legs from the rear upside toward the front downside and rests his or her feet on the pillion passenger steps 33, the seat lower cover 45 is shaped to match with the movement of the leg, so that the portion which is more likely to be damaged can effectively be made as a separate member. Thus, the seat lower cover 45 can be further reduced in size.

The pillion passenger steps 33 are each provided with the foot-resting surface 33a used to receive the foot of the pillion passenger resting thereon. A contact area of the foot with the pillion passenger step 33 can largely be ensured to improve a sense of safety. In addition, the feet of the pillion passenger sitting on the pillion passenger seat portion 28b point forwardly and upwardly. At the extended position of each of the pillion passenger steps 33, the foot-resting surface 33a is tilted forwardly upwardly; therefore, the pillion passenger can rest his or her feet on the pillion passenger steps 33 without a sense of discomfort.

The seat lower covers 45 are each coloured differently in tone from the floor cover 43 and the seat side cover 44; therefore, emphasis in view of design can be placed. In addition, a colour occupation area of each of the seat side covers 44 is reduced on the side surface of the vehicle, which can make the vehicle look compact.

The lower portion of each of the seat side covers 44 and the upper portion of each of the seat lower covers 45 are formed inwardly concavely to cooperatively form the curved recessed portion 76. Therefore, running-air flowing along the side surface of the vehicle body can be arranged. In addition, since the curved recessed portions 76 are each tilted rearwardly upwardly, the running-air flowing along the side surface of the vehicle body can be arranged effectively.

The floor cover 43 is composed of the step floor cover 41 which covers the low floor portion 20 from above in such a manner that the rider sitting on the rider seat portion 28a rests the feet thereon; and the pair of side floor covers 42 formed separately from the step floor cover 41, provided continuously with both the left and right sides of the step floor cover 41, and covering the low floor portion 20 from the side. In addition, the step floor cover 41 is formed with the step-opposing wall portions 75 each constituting the inner-end closing portion of each of the recessed storage portions 70 so as to face the pillion passenger step 33 when it is located in its stored position. Therefore, the number of component parts can be reduced. More specifically, a portion of the step floor on which a foot rests is likely to be scratched with gravel and the like adhering to the foot of the rider; therefore, it cannot be painted. In addition, the inner-end closing portion of each of the storing recessed portions 70 is likely to be scratched by contact with the side surface of the pillion passenger's foot resting on the pillion passenger step 33 when it is in its extended position; therefore, it cannot be painted. Thus, the portion incapable of being painted is continuously formed as the step floor cover 41 which is a single part, so that the number of component parts can be reduced.

The grab rail carrier 78 is disposed above the rear wheel WR so as to partially overlap the rear portion of the pillion passenger seat portion 28b as viewed from the side. The taillight 79 is disposed between the rear wheel WR and the grab rail carrier 78 in the vertical direction. The rear side covers 46 separate from the seat side covers 44 are each disposed below the grab rail carrier 78 as viewed from the side and between the seat side cover 44 and the taillight 79 in the front-to-back direction. When the grab rail carrier 78 is gripped by the pillion passenger or a burden is tied to the grab rail carrier 78, the rear side cover 46 which is a cover below the grab rail carrier 78 may be scratched due to the contact with a rope or the like. If this occurs, only the relatively small-sized rear side cover 46 needs to be replaced; therefore, a replacement part can be made inexpensive.

Further, the seat side cover 44 and the rear side cover 46 are coloured differently in tone from each other; therefore, emphasis in view of design can be placed. In addition, a colour occupation area of each of the seat side covers 44 is reduced on the side surface of the vehicle, which can make the vehicle look compact.

A preferred embodiment of the present invention has been described thus far. The present invention is not limited to the embodiment described above and can be modified in design in various ways without departing from the scope of the invention as defined in the appended claims.

## Claims

1. A scooter-type vehicle comprising:
a body frame (F) including a head pipe (13) steerably supporting a steering handlebar (12) and a low floor portion (20) located rearwardly of the head pipe (13);
a riding seat (28) including a rider seat portion (28a) and a pillion passenger seat portion (28b) positioned such that the low floor portion (20) is located between the head pipe (13) and the riding seat (28);
a body cover (35) including a floor cover (43) which covers the low floor portion (20) from above and from both sides, and a seat side cover (44) which covers from the side a rear portion of the body frame (F) below the riding seat (28); and
a pillion passenger step (33) supported by the body frame (F) so as to be operable between an extended position where the pillion passenger step (33) projects from the body cover (35) so as to make it possible to receive the foot of the pillion passenger thereon, and a stored position where the pillion passenger step (33) is folded toward the body cover (35);
wherein
the floor cover (43) is provided with a recessed storage portion (70) for storing the pillion passenger step (33) in its stored position;
the floor cover (43) is composed of a step floor cover (41) which covers the low floor portion (20) from above, on which the feet of a rider sitting on the rider seat portion (28a) of the riding seat (28) can rest, and a pair of side floor covers (42) formed separately from the step floor cover (41), provided continuously with both left and right sides of the step floor cover (41), and covering the low floor portion (20) from the side, and the step floor cover (41) is formed with a step-opposing wall portion (75) forming an inner-end closing portion of the storing recessed portion (70) so as to face the pillion passenger step (33) located in its stored position; **characterized in that** a seat lower cover (45) constituting part of the body cover (35) and formed separately from the floor cover (43) and the seat side cover (44) is disposed between the floor cover (43) and the seat side cover (44); and the seat lower cover (45) is disposed so as to be tilted rearward upwardly along an upper edge of the recessed storage portion (70) as viewed from the side.

2. The scooter-type vehicle according to claim 1,
wherein the pillion passenger step (33) is provided with a flat foot-resting surface (33a) to receive a pillion passenger's foot resting thereon, and is supported by the body frame (F) in such a manner that the foot-resting surface (33a) is tilted forwardly upwardly when the pillion passenger step (33) is in its extended position.

3. The scooter-type vehicle according to claim 1 or 2,
wherein the seat lower cover (45), the floor cover (43) and the seat side cover (44) are coloured differently in tone from each other.

4. The scooter-type vehicle according to any one of claims 1 to 3,
wherein a lower portion of the seat side cover (44) and an upper portion of the seat lower cover (45) are formed inwardly concavely so as to cooperatively form a curved recessed portion (76).

5. The scooter-type vehicle according to claim 4,
wherein the curved recessed portion (76) is formed to be tilted rearwardly upwardly.

6. The scooter-type vehicle according to any one of claims 1 to 5,
wherein a grab rail carrier (78) is disposed above a rear wheel (WR) so as to partially overlap a rear portion of the pillion passenger seat portion (28b) as viewed from the side, a taillight (79) is disposed between the rear wheel (WR) and the grab rail carrier (78) in the vertical direction, and a rear side cover (46) separate from the seat side cover (44) is disposed below the grab rail carrier (78) as viewed from the side and between the seat side cover (44) and the taillight (79) in a front-to-back direction.

7. The scooter-type vehicle according to claim 6,
wherein the seat side cover (44) and the rear side cover (46) are coloured differently in tone from each other.

## Patentansprüche

1. Motorrollerartiges Fahrzeug, Folgendes umfassend:
einen Karosserierahmen (F) einschließlich eines Kopfrohrs (13), welches lenkbar eine Lenkstange (12) trägt, und eines niedrigen Bodenabschnitts (20), der hinter dem Kopfrohr (13) angeordnet ist,
einen Fahrsitz (28) einschließlich eines Fahrersitzabschnitts (28a) und eines Soziussitzabschnitts (28b), der derart angeordnet ist, dass sich der niedrige Bodenabschnitt (20) zwischen dem Kopfrohr (13) und dem Fahrsitz (28) befindet;
eine Karosserieabdeckung (35) einschließlich einer Bodenabdeckung (43), die den niedrigen Bodenabschnitt (20) von oben und von den Seiten abdeckt, und einer seitlichen Sitzabdeckung (44), die einen hinteren Abschnitt des Karosserierahmens (F) unter dem Fahrsitz (28) von der Seite abdeckt; und
ein Soziustrittbrett (33), welches vom Karosserierahmen (F) derart getragen wird, dass es zwischen einer ausgefahrenen Position, in der das Soziustrittbrett (33) aus der Karosserieabdeckung (35) hervorsteht, um es dem Sozius zu ermöglichen, den Fuß darauf zu stellen, und einer Lagerposition, in der das Soziustrittbrett (33) zum Karosserierahmen (35) hin gefaltet ist, verstellt werden kann;
wobei die Bodenabdeckung (43) eine zurückversetzte Lagerposition (70) aufweist, um das Soziustrittbrett (33) in dessen Lagerposition zu lagern;
die Bodenabdeckung (43) aus einer Trittbrettabdeckung (41) besteht, die den niedrigen Bodenabschnitt (20) von oben abdeckt, auf dem die Füße eines Fahrers, der auf dem Fahrersitzabschnitt (28a) des Fahrsitzes (28) sitzt, ruhen können, sowie aus einem Paar von seitlichen Bodenabdeckungen (42), die separat von der Trittbrettabdeckung (41) ausgeformt sind, gemeinsam mit der linken und der rechten Seite der Trittbrettabdeckung (41) bereitgestellt sind und den niedrigen Bodenabschnitt (20) von der Seite abdecken, und die Trittbrettabdeckung (41) mit einem dem Trittbrett gegenüberliegenden Wandabschnitt (75) ausgeformt ist, der einen innen abschließenden Abschnitt der zurückversetzten Lagerposition (70) ausbildet, sodass dieser dem Soziustrittbrett (33) in dessen Lagerposition gegenübersteht; **dadurch gekennzeichnet, dass** eine untere Sitzabdeckung (45), die einen Teil der Karosserieabdeckung (35) darstellt und separat von der Bodenabdeckung (43) und der seitlichen Sitzabdeckung (44) ausgebildet ist, zwischen der Bodenabdeckung (43) und der seitlichen Sitzabdeckung (44) angeordnet ist; und die untere Sitzabdeckung (45) derart angeordnet ist, dass sie, von der Seite gesehen, entlang einer oberen Kante der zurückversetzten Lagerposition (70) nach hinten und oben geneigt werden kann.

2. Motorrollerartiges Fahrzeug nach Anspruch 1,
wobei das Soziustrittbrett (33) eine flache Fußablageoberfläche (33a) aufweist, um darauf den Fuß eines Sozius aufzunehmen, und derart vom Karosserierahmen (F) getragen wird, dass die Fußablageoberfäche (33a) nach vorn und nach oben geneigt ist, wenn sich das Soziustrittbrett (33) in seiner ausgefahrenen Position befindet.

3. Motorrollerartiges Fahrzeug nach Anspruch 1 oder 2,
wobei die untere Sitzabdeckung (45), die Bodenabdeckung (43) und die seitliche Sitzabdeckung (44) in voneinander verschiedenen Farbtönen gestaltet sind.

4. Motorrollerartiges Fahrzeug nach einem der Ansprüche 1 bis 3,
wobei ein unterer Abschnitt der seitlichen Sitzabdeckung (44) und ein oberer Abschnitt der unteren Sitzabdeckung (45) konkav nach innen geformt sind, um gemeinsam einen gekrümmten, zurückversetzten Abschnitt (76) auszubilden.

5. Motorrollerartiges Fahrzeug nach Anspruch 4,
wobei der gekrümmte zurückversetzte Abschnitt (76) ausgebildet ist, um nach hinten und nach oben geneigt zu sein.

6. Motorrollerartiges Fahrzeug nach einem der Ansprüche 1 bis 5,
wobei ein Haltegriffträger (78) oberhalb eines Hinterrads (WR) derart angeordnet ist, dass er von der Seite gesehen einen hinteren Abschnitt des Sozius-Sitzabschnitts (28b) teilweise überlappt, ein Rücklicht (79) vertikal zwischen dem Hinterrad (WR) und dem Haltegriffträger (78) angeordnet ist und eine hintere Seitenabdeckung (46), die unabhängig ist von der seitlichen Sitzabdeckung (44) von der Seite gesehen unter dem Haltegriffträger (78) und in Richtung von vorn nach hinten zwischen der seitlichen Sitzabdeckung (44) und dem Rücklicht (79) angeordnet ist.

7. Motorrollerartiges Fahrzeug nach Anspruch 6,
wobei die seitliche Sitzabdeckung (44) und die hintere Seitenabdeckung (46) in voneinander verschiedenen Farbtönen gestaltet sind.

## Revendications

1. Véhicule de type scooter comprenant :
une ossature de caisse (F) comprenant un tube de tête (13) supportant en mode orientable un guidon de direction (12) et une partie de plancher basse (20) située en arrière du tube de tête (13) ;
un siège (28) comprenant une partie de siège conducteur (28a) et une partie de siège passager (28b) positionnées de sorte que la partie de plancher basse (20) soit située entre le tube de tête (13) et le siège (28) ;
un parement de caisse (35) comprenant un parement de plancher (43) qui recouvre la partie de plancher basse (20) par le dessus et des deux côtés et un parement latéral de siège (44) qui recouvre sur le côté une partie arrière de l'ossature de caisse (F) en dessous du siège (28) ;
un marchepied passager (33) supporté par l'ossature de caisse (F) de manière à pouvoir se déplacer entre une position en extension, où le marchepied passager (33) fait saillie du parement de caisse (35) de façon à permettre la réception du pied du passager, et une position de rangement, où le marchepied passager est replié vers le parement de caisse (35) ;
dans lequel :
le parement de plancher (43) est pourvue d'une partie de rangement renfoncée (70) pour ranger le marchepied passager (33) dans sa position de rangement ;
le parement de plancher (43) est composé d'un parement de plancher de marchepied (41) qui recouvre la partie de plancher basse (20) par le dessus, sur laquelle les pieds d'un conducteur assis sur la partie de siège conducteur (28a) du siège (28) peuvent reposer, et une paire de parements de plancher latéraux (42) formés séparément du parement de plancher de marchepied (41), aménagés en continu avec à la fois les côtés gauche et droit du parement de plancher de marchepied (41) et recouvrant la partie de plancher basse (20) par le côté, et le parement de plancher de marchepied (41) est formé avec une partie de paroi (75) opposée au marchepied et formant une partie de fermeture de l'extrémité interne de la partie de rangement renfoncée (70) de façon à faire face au marchepied passager (33) situé dans sa position de rangement ; **caractérisé en ce qu'**un parement de siège inférieur (45) faisant partie du parement de caisse (35) et formé séparément du parement de plancher (43) et du parement latéral de siège (44) est disposé entre le parement de plancher (43) et le parement latéral de siège (44) ; et le parement inférieur de siège (45) est disposé de manière à être incliné vers l'arrière et le haut le long d'un bord supérieur de la partie de rangement renfoncée (70), en l'observant du côté.

2. Véhicule de type scooter selon la revendication 1,
dans lequel le marchepied passager (33) est pourvu d'une surface plate d'appui du pied (33a) afin d'y recevoir un pied de passager qui y repose et est supporté par l'ossature de caisse (F) de manière que la surface d'appui du pied (33a) soit inclinée vers l'avant et le haut lorsque le marchepied passager (33) se trouve dans sa position en extension.

3. Véhicule de type scooter selon la revendication 1 ou la revendication 2,
dans lequel le parement inférieur de siège (45), le parement de plancher (43) et le parement latéral de siège (44) ont des couleurs de nuances différentes l'une de l'autre.

4. Véhicule de type scooter selon l'une quelconque des revendications 1 à 3,
dans lequel une partie inférieure du parement latéral de siège (44) et une partie supérieure du parement inférieur de siège (45) sont conformées de manière concave vers l'intérieur pour former une partie enfoncée incurvée (76) en coopération.

5. Véhicule de type scooter selon la revendication 4,
dans lequel la partie renfoncée incurvée (76) est conformée de manière à s'incliner vers l'arrière et le haut.

6. Véhicule de type scooter selon l'une quelconque des revendications 1 à 5,
dans lequel une barre d'appui passager (78) est disposée au-dessus d'une roue arrière (WR) de façon à chevaucher partiellement une partie arrière de la partie de siège passager (28b), en l'observant de côté, un feu arrière (79) est disposé entre la roue arrière (WR) et la barre d'appui passager (78) dans la direction verticale, et un parement latéral arrière (46) séparé du parement latéral de siège (44) est disposé en dessous de la barre d'appui (78), en l'observant de côté, et entre le parement latéral de siège (44) et le feu arrière (79) dans le sens de l'avant vers l'arrière.

7. Véhicule de type scooter selon la revendication 6,
dans lequel le parement latéral de siège (44) et le parement latéral arrière (46) ont des couleurs de nuances différentes l'une de l'autre.
